# EUROPÄISCHE PATENTSCHRIFT

(11) **EP 0 891 304 B1**
(45) Veröffentlichungstag und Bekanntmachung des Hinweises auf die Patenterteilung: **22.08.2001**
(21) Anmeldenummer: 97907044.8
(22) Anmeldetag: 27.02.1997
(51) Int. Cl.: C02F 11/00, C02F 3/34, C02F 1/62

(54) **VERFAHREN ZUR MIKROBIOLOGISCHEN REINIGUNG VON SCHWERMETALLHALTIGEN SCHLÄMMEN**
PROCESS FOR THE MICROBIOLOGICAL PURIFICATION OF SLURRIES CONTAINING HEAVY METALS
PROCEDE DE PURIFICATION MICROBIOLOGIQUE DE BOUES CONTENANT DES METAUX LOURDS

(30) Priorität: 28.03.1996 DE 19613717
(43) Veröffentlichungstag der Anmeldung: 20.01.1999
(73) Patentinhaber: UFZ-UMWELTFORSCHUNGSZENTRUM LEIPZIG-HALLE GMBH, 04318 Leipzig (DE)
(72) Erfinder: SEIDEL, Heinz, D-04317 Leipzig (DE); ONDRUSCHKA, Jelka, D-04109 Leipzig (DE); MORGENSTERN, Peter, D-04357 Leipzig (DE)
(74) Vertreter: Ziebig, Marlene, Dr. Dipl.-Chem.
(86) Internationale Anmeldenummer: EP9700942
(87) Internationale Veröffentlichungsnummer: WO9736832

(56) Entgegenhaltungen:
- EP-A- 0 716 892
- WO-A-95/22375
- US-A- 5 366 891
- PATENT ABSTRACTS OF JAPAN vol. 097, no. 001, 31.Januar 1997 & JP 08 243593 A (COMSON CORP), 24.September 1996,

## Beschreibung

Die Erfindung betrifft ein Verfahren zur mikrobiologischen Laugung von schwermetallhaltigen Schlämmen, bei dem ein oxidierbare Schwefelverbindungen enthaltender schwermetallhaltiger Schlamm mit einem saurem Prozeßwasser perkoliert wird und die durch mikrobielle Aktivitäten gelösten Schwermetalle aus dem Prozeßwasser abgetrennt werden.

Fluß-, Hafen- und technische Schlämme aus dichtbesiedelten und hochindustrialisierten Gebieten sind in der Regel mit hohen Konzentrationen an Schwermetallen belastet. Derartige Schlämme sind ein großes Umweltproblem. Die Schwermetalle liegen in den Schlämmen in unterschiedlicher Bindungsform und Mobilität vor. Kommen die Schlämme mit sauerstoffhaltigem Wasser oder mit Luft in Kontakt, wie es bei Aufwirbelung oder Ausbaggerung der Fall ist, gehen die Schwermetalle durch oxidative Prozesse und Säurebildung in Lösung und werden in die Umgebung oder das Grundwasser ausgetragen. Die bisherige Praxis, die kontaminierten Baggerschlämme auf Spülfelder und Deponien abzulagern muß aus Kostengründen immer mehr eingeschränkt werden. Die früher verbreitete Nutzung im Landschaftsbau verbietet sich wegen der damit verbundenen Gefahren für die Umwelt völlig.

Die Probleme mit der Entsorgung derartiger Schlämme können erheblich gemildert werden, wenn die Schwermetalle aus den Schlämmen herausgelöst werden und aus der flüssigen Phase in eine andere feste Phase überführt werden, in der sie dann in konzentrierter Form vorliegen. Hinsichtlich der Herauslösung von Schwermetallen aus Feststoffen bestehen in der Hydrometallurgie seit langem vielfältige Erfahrungen. Dort werden Erze mit Säuren, Laugen oder Komplexbildnern extrahiert. Analoge Ansätze werden auch auf die Dekontamination von Schlämmen angewendet. So werden nach EP 72 885 natürliche und technische Schlämme mit Salzsäure behandelt. Das Verfahren wurde am Beispiel von Flußschlämmen entwickelt und im halbtechnischen Maßstab erprobt (Müller, G.: Chemiker-Ztg. 106, 289-292, 1982). Nachteil an diesem mit konzentrierter Salzsäure durchzuführenden Verfahren ist die Tatsache, daß nicht nur die Schwermetalle herausgelöst werden, sondern auch Carbonate und Tonmineralien aufgelöst werden, wodurch eine sehr hohe Salzbelastung des Abwassers erfolgt. Die praktische Anwendung des Verfahrens scheiterte darüber hinaus an massiven Korrosionsproblemen. Die konventionellen chemischen Laugungsverfahren sind teuer und produzieren einen biologisch toten Feststoff.

Andere Ansätze verwenden komplexbildende organische Säuren, wie Essigsäure oder Zitronensäure (siehe z.B. Wömmel, S. u.a.:
Altlastensanierung '93. Tagungsband S. 1315-1323, Kluwer) oder deren Salze, wie Tartrate und Citrate, um Schwermetalle aus kontaminierten Feststoffen herauszulösen (Höll, H.: Vom Wasser 84, 251-261, 1995). Die Verfahrenskonzepte einer chemischen Laugung haben den generellen Nachteil, daß hohe Säuremengen benötigt werden und die in den Schlämmen meist sulfidisch gebundenen Schwermetalle teilweise nur schwer löslich sind.

Mikrobiologische Laugungsverfahren ("Bioleaching") werden technisch genutzt, um Schwermetalle aus sulfidischen oder pyritischen Erzen zu gewinnen. Bei diesen Verfahren bewirken Mikroorganismen, insbesondere die schwefel- und eisenoxidierenden Bakterien der Gattung *Thiobacillus*, die Lösung der Schwermetalle, die dann ausgewaschen werden. Bakterien der Gattung *Thiobacillus* kommen in Gewässersedimenten natürlich vor und werden unter aeroben Bedingungen im sauren Millieu aktiviert. Ihre Energie gewinnen sie aus der Oxidation von reduzierten Schwefelverbindungen, elementarem Schwefel und Eisen(II)verbindungen. Schwerlösliche sulfidische Metallverbindungen werden über biochemische Oxidationsreaktionen in wasserlösliche Sulfate überführt, gleichzeitig wird Schwefelsäure produziert.

Die ausgewaschenen Schwermetallsulfate werden dann aus dem Wasser mit üblichen Methoden ausgefällt.

Es wurden ebenfalls Anstrengungen unternommen, schwermetallbelastete Schlämme biologisch zu reinigen. Den bekannten Verfahrensansätzen ist gemeinsam, daß der kontaminierte Schlamm unter Zusatz von Schwefel oder Eisen(II)sulfat, Ansäuern mit Schwefelsäure und Gegenwart von Luft einer Suspensionslaugung unterzogen wird. Durch diese Maßnahmen werden die im Schlamm enthaltenen oder zugesetzten schwefel- und eisenoxidierenden Bakterien aktiviert, wobei die Schwermetalle durch biochemische Prozesse nach mehreren Tagen bis Wochen in Lösung gehen.

So wurde versucht, Schwermetalle aus Klärschlämmen durch bakterielle Suspensionslaugung abzutrennen (Schönborn,W. u. Hartmann, H.: GWF-Wasser/Abwasser 120, 329-335, 1979). Die Schwermetalle wurden durch vorherige anaerobe Schlammfaulung in sulfidische Bindungen überführt. Zusätzlich wurde den Klärschlämmen als Energiequelle für die Bakterien 5-30 % Schwefel, bezogen auf Schlamm-Trockensubstanz zugesetzt. In einem ähnlichen Verfahren wurden Schwermetall-kontaminierte Baggerschlämme unter Zusatz von Eisen(II)sulfat bakteriell gelaugt (Couillard,D. u.a.: Revue des Sciences de l'Eau 7, 251-268, 1994).

Die bekannten Verfahrensansätze haben eine Reihe von schwerwiegenden Nachteilen, die eine technische Anwendung bisher verhindert haben. Da bei der Suspensionslaugung ein Feststoffanteil von maximal 5-10 % eingesetzt werden kann, sind aufwendige Anlagen zur Reinigung der Schlämme erforderlich. Diese Anlagen sind möglicherweise für Klärschlämme praktikabel, es ist jedoch illusorisch, die anfallenden großen Mengen an Baggerschlämmen mittels Suspensionslaugung effektiv zu reinigen. Ein weiterer wesentlicher Nachteil ist es, daß sehr große Mengen Schwefel bezogen auf Schlamm-Trockenprodukt zugegeben werden müssen. Auf diese Weise verbleibt ein hohes Säurebildungspotential im Schlamm, welches zu einer erneuten Umweltgefährdung führt. Die Verwendung von Eisen(II)sulfat führt zu erheblichen Problemen durch Eisenoxid-Ablagerungen.

Aufgabe der Erfindung ist es, Verfahren zur mikrobiologischen Reinigung von schwermetallhaltigen Schlämmen, insbesondere von Baggerschlämmen, zu entwickeln, bei dem durch eine an die Besonderheiten des Schlamms angepaßte Prozeßführung das Leistungspotential der Mikroorganismen besser ausgenutzt, die Effektivität des Verfahrens erhöht und eine Umweltgefährdung vermieden wird.

Diese Aufgabe wird erfingungsgemäß durch eine Perkolationslaugung im Festbett gelöst. Erfindungsgemäß wird mit einem schwefelsauren Prozeßwasser perkoliert, dessen pH-Wert zu Beginn der mikrobiellen Laugung auf < 4 eingestellt ist. Zur Aktivierung der autochthonen *Thiobacilli* wird als energieliefernder Nährstoff Schwefel zugesetzt. Erfindungsgemäß wird dem Schlamm vor oder während der mikrobiellen Laugung jedoch nur soviel Schwefel zugemischt, daß ein Gesamtgehalt an oxidierbaren Schwefelverbindungen, bezogen auf Trockenprodukt, von mindestens 2 % und höchstens 4 % erreicht wird. Dieser Schwefelgehalt hat sich als der Gehalt erwiesen, bei dem das Leistungspotential der Mikroorganismen optimal ausgenutzt und die Umweltgefährdung vermieden wird.

Das erfindungsgemäße Verfahren wird wegen der großen zu behandelnden Mengen zweckmäßigerweise nach dem Perkolationsprinzip durchgeführt. Die biologische Reinigungsanlage besteht hierbei aus einem Festbettreaktor und einem Prozeßwasserbehälter, welche durch einen Wasserkreislauf miteinander verbunden sind. Im Festbettreaktor, der als Schlamm- oder Bodenbehandlungsbecken, als Miete oder in einer anderen herkömmlichen Form ausgelegt sein kann, befindet sich der zu reinigende Schlamm. Im Prozeßwasserbehälter befindet sich saures Wasser, welches mit Schwefelsäure auf einen pH-Wert < 4 eingestellt ist. Die Perkolation erfolgt durch Beregnung des Schlamms, das Sickerwasser wird über eine Drainage in den Sammelbehälter zurückgeführt. Während der Perkolation werden im Schlamm und im Prozeßwasser die für den Laugungsprozeß relevanten Parameter, wie pH-Wert, pO₂-Wert, Temperatur, Leitfähigkeit, Redoxpotential gemessen und/oder geregelt. Weiterhin wird der Gehalt an Schwermetallen und Schwefel, und insbesondere der Oxidationszustand des Schwefels, laufend analysiert. Bevorzugt kommt hier die Methode der Röntgenfluoreszenzanalyse zur Anwendung, wodurch das Verfahren wesentlich effektiviert werden kann.

Aus dem Schlamm werden gegebenenfalls vor der Behandlung gröbere Beimengungen (Kies, Sand) durch herkömmliche Sieb- oder Waschverfahren abgetrennt, da diese nicht oder nur wenig mit Schwermetallen kontaminiert sind. Weiterhin kann es erforderlich sein, die Konsistenz des Schlamms vor der Behandlung zu verbessern, beispielsweise kann der Schlamm durch zeitweise Lagerung in einem Spülfeld oder Absetzbecken oder auf eine andere herkömmliche Art teilweise entwässert oder verrottet werden. Auf diese Weise kann das zu behandelnde Schlammvolumen vermindert, die Wasserdurchlässigkeit erhöht und die mikrobiologische Reaktionsfähigkeit verbessert werden.

Vor der Behandlung wird Gehalt und Oxidationszustand des im Schlamm chemisch gebundenen Schwefels mittels wellenlängendispersiver Röntgenfluoreszenzanalyse (P. Morgenstern und H. Seidel, Contaminated Soil 1995, 529-530, Kluwer Academic Publishers) analytisch bestimmt. Der natürliche Gehalt an oxidierbaren Schwefelverbindungen wird als Basiswert für den mikrobiologischen Laugungsprozeß zugrundegelegt. Dann wird der natürliche Gehalt an oxidierbaren Schwefelverbindungen durch Zumischung von elementarem Schwefel zum Schlamm soweit aufgestockt, daß ein Gesamtgehalt an oxidierbaren Schwefelverbindungen, bezogen auf Trockenprodukt, von mindestens 2 % und höchstens 4 % erreicht wird.

Der vorbehandelte Schlamm wird anschließend mit dem sauren Prozeßwasser beregnet. Zu Beginn und gegebenenfalls auch während der mikrobiellen Laugung wird das Prozeßwasser mit Schwefelsäure auf einen pH-Wert <4 eingestellt. Weiterhin können zum Prozeßwasser gegebenenfalls Thiobacillus-Kulturen und/oder weitere Nährstoffe für die Bakterien zudosiert werden.

Sinkt während der mikrobiellen Laugung der Gesamtgehalt an oxidierbaren Schwefelverbindungen im Schlamm auf < 2 %, so wird erneut Schwefel zugemischt, bis der Gehalt an oxidierbaren Schwefelverbindungen wieder 2 % übersteigt. Die Aufstockung wird insbesondere dann vorgenommen, wenn der mikrobielle Laugungsprozeß weiter aktiviert werden soll. Gegen Ende des Laugungsprozesses können die oxidierbaren Schwefelverbindungen ausgezehrt werden.

Zur Verbesserung der Milieubedingungen für die Mikroorganismen und des Abtransportes der gelösten Schwermetalle kann der Schlamm zeitweise mechanisch durchmischt oder bewegt werden.

Die im Schlamm enthaltenen Schwermetallverbindungen und in geringem Umfang andere in saurem Milieu lösliche Metallverbindungen, insbesondere carbonatische Verbindungen, werden durch die mikrobiellen Prozesse in ihre wasserlöslichen Metallsalze überführt, diese reichern sich im Prozeßwasser an. Dabei sinkt der pH-Wert des Prozeßwassers durch die Bildung von Schwefelsäure ab und kann, je nach Prozeßverlauf, Werte < 2 erreichen.

Wenn der Schwermetallgehalt oder die Ionenkonzentration im Prozeßwasser im Verlauf der Perkolation einen in Abhängigkeit vom Laugungsfortschritt festgelegten Grenzwert übersteigt, wird das Prozeßwasser vollständig oder partiell ausgekreist und durch Frischwasser ergänzt. Der Grenzwert wird so gewählt, daß ständig ein ausreichend hoher Konzentrationsgradient zwischen den im Schlamm gebundenen und den im Prozeßwasser gelösten Schwermetallen gewährleistet ist. Säureverluste, die zu einem unerwünschten Anstieg des pH-Wertes führen, werden durch Zudosierung von Schwefelsäure zum Prozeßwasser soweit ergänzt, daß der vorherige pH-Wert, mindestens aber ein pH-Wert < 4 erreicht wird. Das ausgekreiste saure Prozeßwasser wird einer Schwermetallabtrennung unterzogen. Diese kann nach einem herkömmlichen Verfahren erfolgen. Günstig ist die Ausfällung der gelösten Schwermetalle mittels Calciumhydroxid.

Es ist ein besonderer Vorteil des erfindungsgemäßen Verfahrens gegenüber chemischen Laugungsverfahren, daß das Prozeßwasser nur eine geringe Salzbelastung aufweist. Die Schwermetalle werden weitgehend selektiv gelöst, sonstige Metallverbindungen wie Eisenoxide oder Kalk gehen praktisch nicht oder nur in geringer Menge in Lösung. Damit wird der Aufwand für die Wasserbehandlung und die zu entsorgende Menge an Schwermetallkonzentrat wesentlich reduziert.

Der Schlamm wird nach der Behandlung von den noch im Haftwasser gelösten Schwermetallen sowie der Säure durch eine Wäsche befreit. In den meisten Fällen ist die Perkolation mit Frischwasser ausreichend. Abschließend wird durch Zumischung von Kalk der pH-Wert des Schlamms auf > 7 erhöht, auf diese Weise werden Säurereste neutralisiert und die verbliebenen Schwermetalle immobilisiert.

Es ist ein wesentlicher Vorteil des erfindungsgemäßen Verfahrens gegenüber den bekannten Verfahren zur Sanierung schwermetallbelasteter Schlämme, daß der Prozeßverlauf über den aktuellen Gehalt an oxidierbaren Schwefelverbindungen gezielt beeinflußt werden kann. Damit ist ständig eine hohe mikrobielle Aktivität bei niedrigem Verbrauch an Chemikalien gewährleistet. Der Schlamm bleibt biologisch aktiv und kann nach der Behandlung ohne Probleme z.B. als Bodenverbesserungsmittel bei Rekultivierungsmaßnahmen eingesetzt werden. Die Schwermetalle werden entfernt, ohne daß ein hohes Säurebildungspotential zurückbleibt und eine nachfolgende Umweltgefährdung zu befürchten ist.

Im folgenden werden einige Ergebnisse dargelegt, die die Wirkung des erfindungsgemäßen Verfahrens näher erläutern.

### Beispiel 1

Der Versuch wurde mit einem in einer Monodeponie abgelagerten, teilweise oxidierten Baggerschlamm durchgeführt. Der Gesamt-Schwefelgehalt im Feststoff betrug 1,1 %, der Gehalt an sulfatisch gebundenem Schwefel betrug 0,8 %. Die Bestimmung der Schwermetallgehalte, der Gesamtschwefelgehalte und der Gehalte an sulfatisch gebundenem Schwefel erfolgte mittels wellenlängendispersiver Röntgenfluoreszenzanalyse in den Trockenprodukten. Die Schwermetallgehalte im Feststoff sind in Tab.1 aufgeführt. Der pH-Wert des Schlamms betrug 5,9.

2,0 kg Baggerschlamm (1,5 kg Feststoff) wurden mit 30 g (2 %) Schwefel gemischt, dadurch erhöhte sich der Gehalt an oxidierbaren Schwefelverbindungen von 0,3 auf 2,3 %. Im Vergleichsversuch wurde dem Schlamm kein Schwefel zugemischt. Die Schlämme wurden in Perkolatoren mit 1 1 Prozeßwasser im Kreislauf berieselt. Die Flußrate betrug 1 l/kg*d. Zu Beginn wurde das Prozeßwasser mit Schwefelsäure auf den pH-Wert 4,5 eingestellt. Nach 1 Woche sank der pH-Wert des Prozeßwassers bei Perkolation des Schlamms mit 2,3 % oxidierbaren Schwefelverbindungen durch die mikrobielle Aktivität auf 2,6 und erreichte nach 60 Tagen den Wert 2,1. Im Kontrollversuch stieg der pH-Wert durch die Pufferkapazität des Schlamms zunächst auf etwa 5 an und sank danach langsam auf 4,0. Die Restgehalte an Schwermetallen sind in Tab. 1 aufgeführt.

**Tabelle 1**

| Schwermetallgehalte im Schlamm vor und nach 60 Tagen Laugung | | | | | | | |
|---|---|---|---|---|---|---|---|
| Bedingung | Pb | Cd | Cu | Mn | Ni | Zn | Me-Summe |
| vorher | 248 | 26 | 264 | 736 | 216 | 2450 | 3920 |
| nach 60 Tagen, ohne Schwefelzusatz | | | | | | | |
| | 245 | 21 | 232 | 532 | 170 | 1740 | 2940 |
| nach 60 Tagen, Zusatz von 2 % Schwefel | | | | | | | |
| | 232 | 10 | 132 | 280 | 106 | 610 | 1370 |

Insgesamt wurden an untersuchten Schwermetallen entfernt: im Schlamm mit 2,3 % oxidierbaren Schwefelverbindungen 65 %, im Schlamm mit 0,3 % oxidierbaren Schwefelverbindungen 25 %,

### Beispiel 2

Der Versuch wurde mit einem frisch gebaggerten anoxischen Flußschlamm durchgeführt. Der Gesamt-Schwefelgehalt im Feststoff betrug 1,2 %, der Gehalt an sulfatisch gebundenem Schwefel betrug 0,25 %. Die Schwermetallgehalte im Feststoff sind in Tab. 2 angegeben. Der pH-Wert des Schlamms betrug 7,2.

3,0 kg des teilentwässerten Schlamms (1,2 kg Feststoff) wurden mit 24 g (2%) Schwefel gemischt, der Gehalt an oxidierbaren Schwefelverbindungen erhöhte sich so von 0,95 auf 2,9 %. Im Kontrollversuch wurde dem Schlamm kein Schwefel zugemischt. Das Prozeßwasser wurde mit einer Laborkultur aus der Uranerzlaugung angeimpft und mit Schwefelsäure auf einen Anfangs-pH-Wert von 4 eingestellt. Anschließend erfolgte die Laugung der Schlämme wie in Beispiel 1 beschrieben. Die Flußrate des Prozeßwassers betrug etwa 0,5 l/kg*d. Bei der Laugung des Schlamms mit 2,9 % oxidierbaren Schwefelverbindungen sank der pH-Wert des Prozeßwassers nach 30 Tagen auf 1,9. Im Kontrollversuch mit Schlamm ohne Schwefelzusatz (0,95 % oxidierbare Schwefelverbindungen) sank der pH-Wert auf 3,4. Die Restgehalte an Schwermetallen sind in Tab. 2 aufgeführt:

**Tabelle 2**

| Schwermetallgehalte im Schlamm vor und nach 30 Tagen Laugung | | | | | | | |
|---|---|---|---|---|---|---|---|
| Bedingung | Pb | Cd | Cu | Mn | Ni | Zn | Me-Summe |
| vorher | 148 | 12 | 260 | 850 | 250 | 2300 | 3820 |
| nach 30 Tagen, ohne Schwefelzusatz | | | | | | | |
| | 145 | 7,5 | 216 | 646 | 170 | 1196 | 2380 |
| nach 30 Tagen, Zusatz von 2 % Schwefel | | | | | | | |
| | 132 | 3,5 | 104 | 272 | 88 | 470 | 1070 |

Insgesamt wurden an untersuchten Schwermetallen entfernt: im Schlamm mit 2,9 % oxidierbaren Schwefelverbindungen 72 %, im Schlamm mit 0,9 % oxidierbaren Schwefelverbindungen 38 %.

### Beispiel 3

Der Versuch wurde mit einem abgelagerten Baggerschlamm der Weißen Elster (57 % Feststoffgehalt) durchgeführt. Der Gesamt-Schwefelgehalt im Feststoff betrug 1,3 %, der Gehalt an sulfatisch gebundenem Schwefel betrug 0,8 %. Der Feststoff enthielt 35 ppm Cadmium, 950 ppm Mangan, 300 ppm Nickel und 3400 ppm Zink. Weitere Schwermetalle wurden nicht in Betracht gezogen, da deren Gehalte unkritisch waren. Der pH-Wert des Schlamms betrug 5,7.

Der Laugungsversuch erfolgte in einer Feld-Versuchsanlage. Diese bestand aus einem mit Kiesbett und Drainage ausgestatteten Becken (Volumen 30 m³), einer Beregnungseinrichtung, Tanks (Volumen 4 m³) für das Prozeßwasser, sowie einem Steuer- und Monitoring-System. Das Versuchsbecken wurde mit 22 t Schlamm (12,5 t Feststoff) 60 cm hoch befüllt. Dem Schlamm wurden während der Befüllung 100 kg Schwefel zugemischt, dadurch erhöhte sich der Gehalt an oxidierbaren Schwefelverbindungen von 0,5 auf 1,3 %. Der Schlamm wurde intervallweise mit Prozeßwasser beregnet, die Flußrate betrug etwa 0,6 m³/t_{TP}*d.

Der Laugungsversuch umfaßte 2 Versuchsphasen. Dem Prozeßwasser wurden in den ersten 7 Tagen nach Versuchsbeginn 120 kg Schwefelsäure zudosiert, um die Pufferkapazität des Sedimentes zu unterdrücken. Nach der Zugabe stellte sich im Prozeßwasser ein pH-Wert von 4,2 ein. Anschließend wurde der Schlamm (1,3 % oxidierbare Schwefelverbindungen) 49 Tage mit dem Prozeßwasser perkoliert. Während dieser Zeit sank der pH-Wert auf 3,8. Die Analyse des Schlamms ergab danach folgende Schwermetallgehalte im Feststoff: 26 ppm Cadmium, 670 ppm Mangan, 234 ppm Nickel, 2350 ppm Zink. Nach der ersten Versuchsphase waren insgesamt 30 % der untersuchten Schwermetalle entfernt.

Zu Beginn der zweiten Versuchsphase wurden in den Schlamm weitere 100 kg Schwefel eingemischt. Dadurch stieg der Gehalt der oxidierbaren Schwefelverbindungen auf 2,1 %. Der Schlamm wurde danach 63 Tage mit dem Prozeßwasser perkoliert. Während dieser Zeit wurde der Schlamm zweimal mechanisch durchmischt. Der pH-Wert des Prozeßwassers sank durch mikrobielle Aktivitäten auf 3,0. Im Prozeßwasser reicherten sich die gelösten Schwermetalle an. Wenn ihre Gesamtkonzentration 1000 mg/l erreicht hatte, wurde jeweils 1 m³ Prozeßwasser ausgekreist und durch Frischwasser ergänzt. Bei Versuchsende wurde der der Schlamm mehrere Tage mit Frischwasser perkoliert. Eine Analyse des Schlamms ergab danach folgende Schwermetallgehalte im Feststoff: 14 ppm Cadmium, 336 ppm Mangan, 135 ppm Nickel, 1100 ppm Zink. Nach der zweiten Versuchsphase waren insgesamt 66 % der untersuchten Schwermetalle entfernt.

In das ausgekreiste Prozeßwasser wurden solange Kalkhydrat eingerührt, bis der pH-Wert auf 9 gestiegen war. Hierzu waren etwa 5 g/l Kalkhydrat erforderlich. Die als Hydroxide ausgefällten Schwermetalle wurden zusammen mit dem überschüssigen Kalkhydrat abgetrennt. Eine Analyse des Wassers nach der Behandlung ergab folgende Schwermetall-Restgehalte:
<0,1 ppm Cadmium, <0,1 ppm Mangan, <0,1 ppm Nickel, <1 ppm Zink.

## Patentansprüche

1. Verfahren zur mikrobiologischen Reinigung von schwermetallhaltigen Schlämmen, bei dem ein oxidierbare Schwefelverbindungen enthaltender schwermetallhaltiger Schlamm mit einem sauren Prozeßwasser perkoliert wird und die durch mikrobielle Aktivitäten gelösten Schwermetalle aus dem Prozeßwasser mit üblichen Methoden abgetrennt werden,
dadurch gekennzeichnet,
daß dem Schlamm im Festbettreaktor vor und/oder während der mikrobiellen Laugung mit dem Prozeßwasser soviel Schwefel zugemischt wird, daß ein Gesamtgehalt an oxidierbaren Schwefelverbindungen, bezogen auf Trockenprodukt, von mindestens 2 % und höchstens 4 % erreicht wird und daß das Prozeßwasser zu Beginn der mikrobiellen Laugung mit Schwefelsäure auf einen pH-Wert < 4 eingestellt wird.

2. Verfahren nach Anspruch 1,
dadurch gekennzeichnet,
daß der Schlamm zeitweise mechanisch durchmischt wird.

3. Verfahren nach Anspruch 1 oder 2,
dadurch gekennzeichnet,
daß das Prozeßwasser auch während der mikrobiellen Laugung mit Schwefelsäure auf einen pH-Wert <4 eingestellt wird.

4. Verfahren nach einem der Ansprüche 1 bis 3,
dadurch gekennzeichnet,
daß das Prozeßwasser vollständig oder partiell ausgekreist wird und die gelösten Schwermetalle mit Calciumhydroxyd ausgefällt werden.

5. Verfahren nach einem der Ansprüche 1 bis 4,
dadurch gekennzeichnet,
daß Fluß-, Staubecken-, Hafen- und Klärschlämme und Schlämme aus Meeresbuchten und Seen gereinigt werden.

6. Verfahren nach einem der Ansprüche 1 bis 5,
dadurch gekennzeichnet,
daß als Festbettreaktor ein Schlamm- oder Bodenbehandlungsbecken oder eine Miete eingesetzt wird.

## Claims

1. A process for the microbiological decontamination of sludges containing heavy metals, wherein a heavy metal-containing sludge including oxidizable sulfur compounds is percolated with an acid process water, and the heavy metals dissolved as a result of microbial activity are removed from the process water using conventional methods,
characterized in that
prior to and/or during microbial leaching, the sludge in the fixed-bed reactor is admixed with an amount of sulfur included in the process water so as to obtain an overall content of oxidizable sulfur compounds of at least 2%, and 4% at maximum, relative to the dry product, and that the process water at the beginning of microbial leaching is adjusted to a pH value of < 4 using sulfuric acid.

2. The process according to claim 1,
characterized in that
the sludge is subjected to temporary mechanical mixing.

3. The process according to claim 1 or 2,
characterized in that
in the course of microbial leaching as well, the process water is adjusted to a pH value of < 4 using sulfuric acid.

4. The process according to any of claims 1 to 3,
characterized in that
the process water is completely or partially circulated and the dissolved heavy metals are precipitated using calcium hydroxide.

5. The process according to any of claims 1 to 4,
characterized in that
river, storage basin, harbor and clarification sludges, as well as sludges from sea bays and lakes are subjected to decontamination.

6. The process according to any of claims 1 to 5,
characterized in that
a sludge or soil treatment basin or a pit is used as fixed bed reactor.

## Revendications

1. Procédé d'épuration microbiologique des boues contenant des métaux lourds, au cours duquel une boue contenant des métaux lourds et comportant des composés soufrés oxydables est percolée avec une eau de traitement acide et les métaux lourds mis en solution par les activités microbiennes sont séparés de l'eau de traitement par des méthodes traditionnelles
caractérisé en ce que
l'on ajoute du soufre à la boue dans le réacteur à lit fixe avant et/ou pendant la lixiviation microbienne avec de l'eau de traitement en une quantité nécessaire pour obtenir une teneur totale en composés soufrés oxydables, rapportée au produit sec, d'au moins 2 % et de 4 % au maximum et que l'on ajuste le pH de l'eau de traitement à une valeur de pH < 4 avec de l'acide sulfurique au début de la lixiviation microbienne.

2. Procédé d'après la revendication 1,
caractérisé en ce que
l'on mélange la boue mécaniquement périodiquement.

3. Procédé d'après la revendication 1 ou 2,
caractérisé en ce que
l'on ajuste le pH de l'eau de traitement à un pH < 4 avec de l'acide sulfurique également pendant la lixiviation microbienne.

4. Procédé d'après une des revendications de 1 à 3,
caractérisé en ce que
l'eau de traitement circule en totalité ou en partie vers l'extérieur et que les métaux lourds dissous sont précipités avec de l'hydroxyde de calcium.

5. Procédé d'après une des revendications de 1 à 4,
caractérisé en ce
qu'il a pour effet d'épurer les boues de rivière, de bassin de retenue, les boues portuaires, les boues de curage et les boues provenant des anses de mer et des lacs.

6. Procédé d'après une des revendications de 1 à 5,
caractérisé en ce que
l'on utilise, en tant que réacteur à lit fixe, un bassin de traitement des boues ou une cuve de traitement au sol ou une fosse.
